# FASCICULE DE BREVET EUROPEEN

(11) **EP 1 087 910 B1**
(45) Date de publication et mention de la délivrance du brevet: **29.12.2004**
(21) Numéro de dépôt: 00915291.9
(22) Date de dépôt: 05.04.2000
(51) Int. Cl.: C02F 1/46, C02F 1/48

(54) **PROCEDE ET INSTALLATION DE TRAITEMENT DE L'EAU A FORTE DURETE ET/OU CONTENANT UNE HAUTE TENEUR EN SULFATES**
VERFAHREN UND VORRICHTUNG ZUR BEHANDLUNG VON WASSER MIT HOHER HÄRTE UND/ODER HOHEM SULFATGEHALT
METHOD AND PLANT FOR TREATING WATER WITH HIGH DEGREE OF HARDNESS AND/OR HAVING A HIGH SULPHATE CONTENT

(30) Priorité: 14.04.1999 FR 9904851
(43) Date de publication de la demande: 04.04.2001
(73) Titulaire: Expertima, 13500 Martigues (FR)
(72) Inventeur: GALLO, Michel Alexandre, 13500 Martigues (FR)
(74) Mandataire: Domange, Maxime
(86) Numéro de dépôt international: PCT/FR2000/000849
(87) Numéro de publication internationale: WO 2000/061500

(56) Documents cités:
- EP-B- 0 680 457
- FR-A- 2 642 443
- US-A- 4 963 268
- US-A- 5 094 739
- US-A- 5 149 438
- US-A- 5 656 171

## Description

La présente invention a pour objet un procédé et une installation de traitement de l'eau à forte dureté et/ou contenant une haute teneur en sulfates.

Le secteur technique de l'invention est le domaine de l'adoucissement, du traitement physique de l'eau, et de la prévention de l'entartrage et de la corrosion.

L'application principale de l'invention est la protection des générateurs et des circuits de distribution d'eau chaude sanitaire, comportant des ballons de stockage tampon, et dans lesquels la production d'eau chaude est assurée soit par des résistances électriques placées dans ledit ballon, soit par des échangeurs extérieurs audit ballon et bouclés sur celui-ci.

On connaît différentes installations permettant de traiter l'eau dite « dure » pour limiter l'entartrage en particulier des canalisations et des générateurs d'eau chaude, lesdites installations comportant des dispositifs de traitement, soit chimiques, soit physiques. Il s'avère cependant que tous les dispositifs connus, tel que par exemple celui décrit dans la demande de brevet EP n° 680 457 (publiée le 8 Novembre 1995, sous priorité de trois demandes de brevets anglaises, intitulée « Procédé et dispositif de traitement de fluide » et décrivant un dispositif de traitement physique, certes très performant en lui-même, parmi les meilleurs connus à ce jour), ne permettent pas de traiter des eaux dures au-delà d'une dureté TH (titre hydrotimétrique) de 45 degrés français (correspondant à un équivalent de 450 milligrammes par litre de carbonate de calcium), qui est considéré déjà comme une eau très dure. En effet, au-delà d'une telle dureté, les installations comportant ces dispositifs connus ne permettent pas d'empêcher la précipitation des carbonates de calcium et de magnésium en calcite et/ou des sulfates en gypse, ce qui obstrue à la longue les canalisations et les générateurs ou ballons de production et/ou de stockage d'eau chaude.

Le problème posé est donc de pouvoir traiter de l'eau dure au-delà de 40 degrés f de TH et jusqu'à même 80 degrés f de TH (soit de 400 à 800 mg par litre, exprimé en équivalent de carbonate de calcium et de magnésium), et avec même des teneurs en sulfates de 150 à 1 200 mg par litre : de telles eaux sont également impossibles à traiter efficacement à ce jour avec les installations et procédés connus, en raison de la cristallisation dure du calcaire sous forme de calcite, et des sulfates de calcium et de magnésium sous forme de gypse.

Une solution au problème posé est un procédé, et/ou une installation utilisant un tel procédé, pour le traitement physique de l'eau à forte dureté et/ou contenant une forte teneur en sulfates, laquelle eau circule à travers au moins un générateur de production d'eau chaude à partir d'une alimentation en eau froide, au moins un ballon de stockage tampon de l'eau chaude produite et au moins un dispositif de traitement physique de cette eau ; selon l'invention :
- on fait circuler, avant de la distribuer, l'eau chaude produite dans ledit générateur dans une boucle fermée sur celui-ci et comportant au moins ledit ballon de stockage tampon et un dispositif de traitement physique de l'eau, préférentiellement à effet microélectrolytique, mais qui peut être magnétique, électronique, générant des ondes basses fréquences ....;
- on établit ladite circulation suivant un débit assurant au moins deux fois par heure le renouvellement dudit ballon pendant au moins huit heures par jour et tel qu'on enrichit par cette circulation l'eau en germes ioniques de carbonates de calcium et de magnésium sous forme d'aragonite majoritaire (soit supérieure à 80 %), qui empéchent les ions sulfates et carbonates de calcium et de magnesium de précipiter, respectivement en gypse et en calcite durs et incrustants.

Si les canalisations dans lesquelles circulent les eaux froide et/ou chaude sont en matériau plastique d'usage habituel en adduction d'eau, la performance de l'installation de traitement de l'eau suivant l'invention diminue, car la formation de germes ioniques est alors plus faible, même en créant une boucle de recirculation suivant l'invention : cette incidence négative a été notée avec un dispositif à microélectrolyse de type de celui décrit dans la demande de brevet EP n° 680 457 mais peut aussi être relevé sur tout autre dispositif de traitement physique de l'eau qui convertit la calcite en aragonite.Aussi, dans un mode préférentiel de réalisation, quand les tuyauteries entourant les dispositifs de traitement physique de l'eau sont en plastique, on intercale avant et après celui-ci au moins deux mètres de tube métallique, soit en fait de deux à cinq mètres et de préférence trois mètres. Le taux de conversion en germes ioniques n'est alors plus affecté et il est alors possible de traiter efficacement les eaux dures ou très riches en sulfates avec le procédé suivant l'invention, de même bien sûr que les eaux de caractéristiques normales.

Parmi d'autres facteurs ayant une influence négative sur la formation des germes ioniques, un des plus importants facteurs est l'anode en magnésium qui est souvent présente dans le ballon de production et/ou de stockage du circuit d'alimentation en eau chaude : en effet, ce métal très électronégatif se comporte comme un capteur à germes ioniques au fur et à mesure de leur formation, et accroît la vitesse d'entartrage des générateurs d'eau chaude, bien qu'il soit connu pour son activité anticorrosion protectrice des métaux ferreux. Aussi, pour éviter que la présence d'anode en magnésium dans le ballon de production et/ou de stockage d'eau chaude n'affecte l'efficacité du procédé suivant l'invention, quelle que soit la dureté et la teneur en sulfates de l'eau à traiter, on enlève cette anode avant de commencer ledit traitement.

Le résultat est de nouveaux procédé et installation de traitement physique de l'eau à forté dureté et/ou contenant une haute teneur en sulfates qui permettent de répondre au problème posé en réduisant la production de calcaire ou calcite, et de sulfates sous forme de gypse, qui ne peuvent plus alors se déposer sur les parois des canalisations, des réservoirs et des échangeurs (à plaques, tubulaires ou d'autres types).

Des expérimentations, réalisées suivant le procédé de l'invention, ont été conduites en utilisant un dispositif de traitement physique de l'eau, non magnétique et générant une microélectrolyse de l'eau (tel que celui décrit dans le brevet cité précédemment EP n° 680 457), et avec des eaux réputées très difficiles à traiter, voire impossibles, soit ayant une dureté comprise entre 40 et 80° français de TH et une teneur en sulfates de 150 à 1 200 mg par litre : lorsque l'eau circule au travers du dispositif de traitement physique de l'eau, une différence de potentiel de - 1 volt est crééc sans apport électrique exogène ; c'est la réaction entre les particules ionisées présentes dans l'eau (ions Ca⁺⁺ et ions Mg⁺⁺) et les canaux de zinc couplés aux polymères diélectriques, tels qu'existant dans un tel dispositif, qui engendre une microélectrolyse de l'eau avec modification de la structure cristalline du calcaire potentiel. Cette modification de la structure cristalline du calcaire final se fait à des degrés divers par l'interaction initiale des ions de bicarbonates de calcium et de magnésium présents dans l'eau. Plus un produit de traitement physique de l'eau est efficace, plus grand est le taux de conversion de calcite (forme dure du calcaire) en aragonite (forme molle non incrustante dans l'eau).

Il a été également relevé par des expérimentations utilisant le procédé de l'invention, que plus la dureté de l'eau est élevée, plus il faut convertir de bicarbonates de calcium et de magnésium en germes ioniques pour accroître la nucléogénèse et favoriser ainsi la formation d'aragonite sous forme molle. Par ailleurs, plus la teneur en sulfates de l'eau est élevée (entre 250 et 1 200 mg par litre), ce qui se rencontre dans les eaux issues de sous-sols riches en gypse, plus la difficulté pour convertir le calcaire potentiel en aragonite, à partir des bicarbonates, est importante.

Dans les installations connues à ce jour, on place les dispositifs de traitement physique de l'eau, comme celui cité précédemment, sur l'eau froide d'alimentation et un autre sur (quand il existe)le retour de boucle de l'eau chaude pour augmenter la durée de traitement : la formation de calcaire et de sulfates de calcium et de magnésium (gypse) est alors importante dans le ballon d'eau chaude, dans le générateur de chaleur et dans les canalisations, comme on a pu le contrôler sur les manchettes témoins, telles que représentées sur les figures jointes en référence 17 ; avec un générateur d'eau chaude sans retour de boucle d'eau chaude, et ne traitant seulement que l'eau froide d'alimentation, le résultat est, bien sûr, pire : il y a une très forte production de calcaire et de sulfates de calcium et de magnésium durs qui précipitent dans le générateur, le ballon et les canalisations, la température de l'eau chaude étant réglée classiquement à 60°C.

En revanche, en utilisant le procédé et une installation suivant l'invention, c'est à dire en créant principalement une boucle artificielle ou en utilisant une boucle existante entre la sortie du générateur d'eau chaude et l'entrée d'eau froide dans ledit générateur et en ajustant le débit de circulation en fonction de la dureté et du taux de sulfates, il a été constaté d'une manière surprenante, que la production de calcaire et de sulfates déposée sur les parois diminue et peut être maintenue à un niveau très faible. Le taux de circulation a été montré comme ayant une importance capitale, en ce sens que plus la dureté de l'eau est élevée, plus le taux de circulation sera élevé, jusqu'à dix fois le volume du ballon de stockage tampon de l'eau chaude ; de même quand la teneur en sulfates de l'eau est importante. Le taux minimum défini dans la présente invention est de renouveler deux fois par heure le volume du ballon de stockage d'eau chaude pour les teneurs en sulfates de l'ordre de 100 à 300 mg par litre et cela pendant au moins 8 heures par jour si ce n'est en continu.

En fait, l'enrichissement en germes ioniques de carbonates de calcium et de magnésium permet de maintenir en microsuspension les ions sulfates de calcium et de magnésium qui ne précipitent plus dans le générateur, dans le ballon de stockage, ni dans le réseau de canalisations. La formation de calcite dur est ainsi maîtrisée, de même que la précipitation de sulfates durs, qui sont pourtant impossibles à traiter sans utiliser des caractéristiques propres au procédé ou à l'installation suivant l'invention.

Il a été testé trois cas d'eau dure, tels que :

| Composants de l'eau | Cas 1 | Cas 2 | Cas 3 |
|---|---|---|---|
| Dureté TH en °français (soit équivalent en mg par litre de carbonate de calcium) | 45 (450) | 45 (450) | 82 (820) |
| Bicarbonates (TAC) (mg/l) | 350 | 210 | 220 |
| Sulfates (mg/l) | 150 | 460 | 1 180 |
| Chlorures (mg/l) | 10 | 10 | < 10 |
| Nitrates (mg/l) | 10 | 10 | < 10 |
| Conductivité (µS/cm) | 800 | 760 | 1 250 |

Le premier cas est en fait une eau réputée déjà très dure à ce jour et étant la limite du traitement possible avec les installations et procédés connus : le rapport de la teneur en bicarbonates sur la teneur en sulfates étant supérieure à 2, on arrive cependant à réduire leur précipitation dans les installations actuelles les plus performantes.

Dans les cas 2 et 3, le rapport bicarbonates/sulfates est inférieur respectivement à 0,5 et 0,2, ce qui donne une majorité de sulfates et donc dans les installations actuelles une précipitation en gypse de ceux-ci, avec en plus dans le cas n° 2 et pour les installations actuelles les moins performantes, une précipitation des carbonates en calcite.

En traitant de telles eaux, y compris le cas n°2 et le cas n°3 avec le procédé et l'installation suivant l'invention, on obtient très peu de gypse et de calcite, qui restent alors en micro-suspension dans l'eau, ne se déposant plus sur les parois, l'aragonite produire étant dans tous les cas majoritaire et entraînée par le débit de l'eau, ce qui est impossible à obtenir à ce jour même dans les installations actuelles les plus performantes.

De plus, il a été noté que le procédé et les installations suivant l'invention amélioraient la protection anticorrosion des tuyauteries dans tout le réseau en acier galvanisé, comme cela a pu être contrôlé également grâce aux manchettes témoins, référencées 17 sur les figures jointes. Le procédé suivant l'invention peut s'appliquer également pour les eaux riches en chlorures et permet d'assurer, outre la protection anticalcaire, une protection anticorrosion grâce au taux important de germes ioniques protecteurs à base de carbonates de calcium et de magnésium.

On pourrait citer d'autres avantages à la présente invention mais ceux cités ci-dessus en montrent déjà suffisamment pour en prouver la nouveauté et l'intérêt. La description des figures et les figures ci-jointes représentent des exemples de réalisation de l'invention mais n'ont aucun caractère limitatif. D'autres réalisations sont possibles dans le cadre de la portée et de l'étendue de cette invention, en particulier en utilisant différents circuits de distribution et/ou de production d'eau chaude.
La figure 1 est une installation de traitement d'eau suivant l'invention sans bouclage de réseau d'eau chaude.
La figure 2 est un schéma d'installation de traitement d'eau suivant l'invention avec bouclage du réseau de distribution d'eau chaude et utilisation d'un générateur d'eau chaude à plaques extérieur au ballon tampon de stockage.

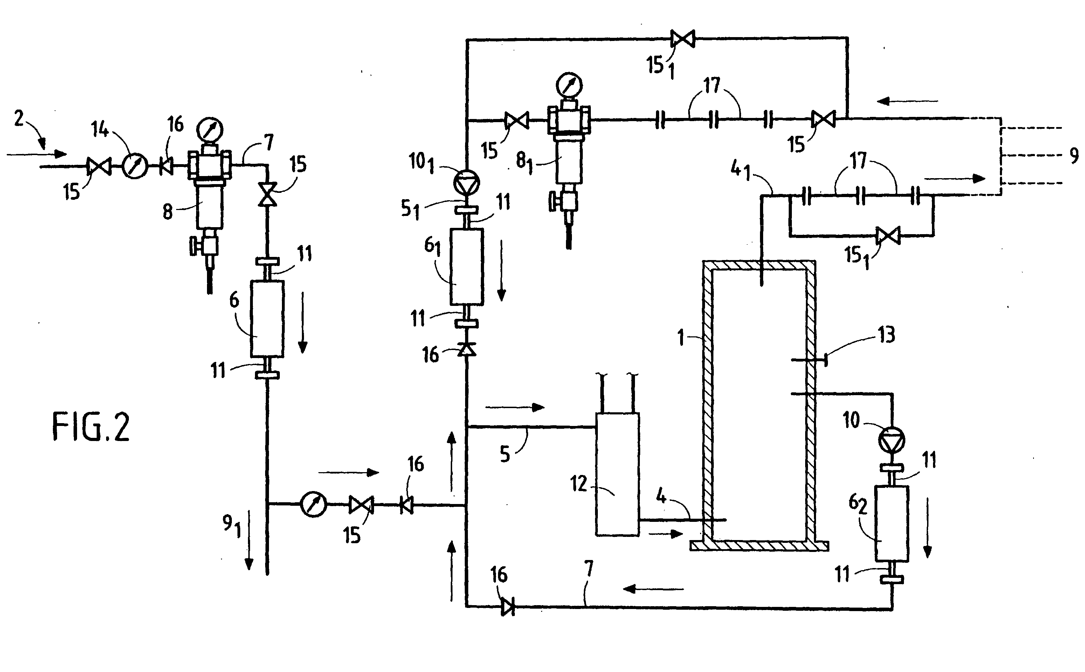

L'installation de traitement d'eau suivant l'invention pourrait également être utilisée avec des circuits comprenant des ballons de stockage d'eau chaude et dont le générateur, extérieur audit ballon comme sur la figure 2, est bouclé sur celui ci et positionné sur le côté sans que le réseau de distribution d'eau chaude soit lui même bouclé ; un tel générateur peut être un échangeur à plaques et/ou chauffé par un circuit primaire d'eau chaude venant d'une chaudière.

Dans tous les cas, l'installation et le traitement physique de l'eau à forte dureté et/ou contenant une haute teneur en sulfates comme défini précédemment, comporte d'une manière connue, au moins un générateur 12 de production d'eau chaude à partir d'une alimentation 2 en eau froide, au moins un ballon tampon 1 de stockage de l'eau chaude produite et au moins un dispositif de traitement physique de cette eau.

Selon l'invention, l'installation comporte, quel que soit le circuit de distribution (bouclé ou non) et/ou de production (extérieur au ballon ou non) de l'eau chaude, au moins une boucle 7,5 de tuyauterie raccordée audit générateur 12, laquelle boucle comprend au moins ledit ballon de stockage 1 tampon, un dispositif de traitement physique de l'eau 6₂ de préférence à effet micro-électrolytique, tel que par exemple celui décrit dans la demande de brevet EP n° 680 457 citée précédemment, et une pompe de circulation 10 apte à assurer au moins deux fois par heure le renouvellement du volume dudit ballon et pendant au moins huit heures par jour, ledit dispositif de traitement physique de l'eau 6₂ étant apte à enrichir l'eau en germes ioniques de carbonates de calcium et de magnésium sous forme d'aragonite majoritaire, molle et non incrustante.

Par exemple, sur la base d'un ballon de stockage d'eau chaude 1 de 1 m3 de capacité hydraulique, pour assurer une production complète contre le calcaire et la corrosion de ce ballon 1 et de son générateur d'eau chaude 12 ainsi que du réseau 3, 9, de canalisations situé en aval et assurant la distribution de l'eau chaude, le débit de circulation dans la boucle 7,5 est de l'ordre, en fonction de la dureté de l'eau et du taux de sulfates suivant la présente invention, de 2 à 10 m3 par heure en continu et au moins pendant le tiers de 24 heures de manière à créer un maximum de germes ioniques à partir des bicarbonates de calcium et de magnésium présents dans l'eau froide d'alimentation, puis des carbonates de calcium et de magnésium dans l'eau chaude.

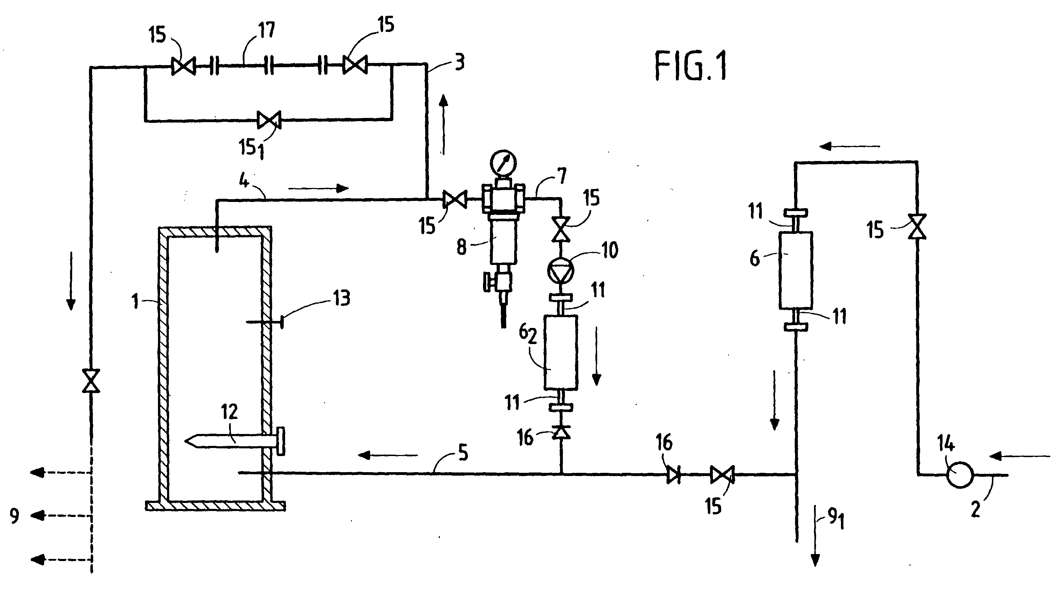

Suivant les installations représentées sur la figure 1, il est certain que le débit de circulation dans la boucle 7 ne doit par perturber le débit demandé par les utilisateurs 9 depuis le circuit de distribution 3 en eau chaude ; pour cela le traitement suivant l'invention est réalisé de préférence pendant les huit heures de nuit, au cours desquelles la demande de distribution est faible, (de plus on profite alors du faible coût du courant électrique alimentant éventuellement la résistance 12 servant de générateur d'eau chaude intégrée au ballon 1) ; pendant la journée, la circulation dans ladite boucle 7 peut être réduite et même stoppée : l'efficacité du traitement permet en effet de maintenir, même quand celui ci est arrêté, suffisamment de germes ioniques dans les générateurs, ballons et circuits pour éviter, puis limiter, la précipitation des carbonates et des sulfates respectivement en calcite et en gypse; puis lors de la remise en route du traitement suivant l'invention, on inverse le processus de précipitation de gypse et de calcite, qui se seraient malgré tout formés et déposés, en les remettant en micro-suspension dans l'eau du générateur et du ballon jusqu'à ce qu'ils soient évacués lors des utilisations ultérieures ; il en est de même pour les précipitations qui auront pu intervenir pendant la journée dans les canalisations 3 de distribution et qui seront régénérées et évacuées lors des utilisations suivantes lorsque l'eau à nouveau traitée suivant l'invention et stockée dans le ballon réservoir tampon 1 repassera dans lesdites canalisations.

Suivant la représentation de la figure 1, dans laquelle le générateur 12 d'eau chaude est donc situé dans le ballon de stockage 1, ladite boucle 7,5 suivant l'invention est réalisée entre la tuyauterie d'alimentation 5 en eau froide du ballon 1 et la sortie en eau chaude 4 de celui ci avant le- départ 3 des utilisateurs 9.

Suivant le mode de représentation de la figure 2, l'installation comporte un circuit 3 de distribution d'eau chaude, à partir dudit ballon de stockage 1, lequel circuit 3 du réseau de canalisation permettant la distribution 9 est bouclé sur ledit ballon par le retour 5₁ et comporte un générateur d'eau chaude 12 externe au ballon 1 et dans lequel circule l'eau chaude en continu : ladite boucle 7,5 suivant l'invention est en ce cas constituée par un deuxième circuit bouclé entre le ballon 1 et le générateur d'eau chaude 12 externe audit ballon 1. Dans les installations comportant un circuit de production de l'eau chaude extérieur et bouclé sur ledit ballon de stockage 1 (mais indépendant du circuit 3 de distribution quand celui-ci est en boucle 3,5₁) le circuit de production peut constituer également ladite boucle 7,5 suivant l'invention et qui comprend alors le générateur d'eau chaude 12.

Dans ces derniers cas, ledit générateur 12 d'eau chaude peut être un échangeur, à plaques ou tubulaire, situé dans ladite boucle 7,5 en amont du ballon 1 de stockage.

Dans un mode préférentiel de réalisation, tel que représenté sur la figure 1, ladite boucle 7,5 comprend un filtre 8 placé en amont de la pompe de circulation 10 et du dispositif 6₂ de traitement physique de l'eau chaude.

Les installations suivant l'invention peuvent être réalisées à partir d'installations existantes et comportent par ailleurs différents compteurs 14 de l'eau, vannes 15 d'isolement ou de fermeture 15 ou de "by-pass" 15₁, ainsi que des clapets anti retour 16. Ces installations peuvent comporter sur l'alimentation principale en eau froide 2 un dispositif de traitement physique de l'eau avant d'alimenter d'une part le circuit de production 5,4 et de distribution 3;9 d'eau chaude, et d'autre part le circuit 9₁ de distribution d'eau froide. Pour les installations comportant un circuit bouclé 3,5₁ de distribution d'eau chaude, comme sur la figure 2, un autre dispositif 6₁ de traitement physique de l'eau peut également être installé sur ce circuit ainsi qu'un filtre 8₁.

La tuyauterie située en amont et en aval du dispositif 6 de traitement physique de l'eau 6, 6₁, 6₂ comprend une longueur de tube métallique 11 de deux mètres minimum de chaque côté de chaque dispositif 6, 6₁, 6₂ et ledit ballon 1 de stockage d'eau chaude ne comporte aucune anode en magnésium 13 : si c'est le cas, celle ci doit être enlevée.

## Revendications

1. Procédé de traitement physique d'une eau à forte dureté et/ou contenant une haute teneur en sulfates, laquelle eau circule au travers au moins d'un générateur (12) de production d'eau chaude à partir d'une alimentation (2) en eau froide, au moins un ballon de stockage (1) tampon de l'eau chaude produite et au moins un dispositif de traitement physique (6) de cette eau **caractérisé en ce que** :
- on fait circuler, avant de la distribuer, l'eau chaude produite dans ledit générateur (12) dans une boucle (7,5) sur celui-ci et comportant au moins ledit ballon de stockage (1) tampon et un dispositif de traitement physique de l'eau (6₂) **comportant des polymères diélectriques,**
- on établit ladite recirculation suivant un débit assurant au moins deux fois par heure le renouvellement dudit ballon (1) pendant au moins huit heures par jour et tel qu'on enrichit par cette recirculation l'eau en germes ioniques de carbonates de calcium et de magnésium sous forme d'aragonite majoritaire **molle et non incrustante,** qui empêchent les ions sulfates et carbonates de calcium et de magnésium de précipiter, respectivement en gypse et en calcite durs et incrustants.

2. Procédé selon la revendication 1, **caractérisé en ce que** ledit dispositif de traitement physique de l'eau (6₂) comporte en outre des canaux de zinc couplés auxdits polymères diélectriques, lesdits canaux en zinc étant adaptés à générer un effet microélectrolytique créant une différence de potentiel de moins un volt (-1 Volt) à travers l'eau sans apport électrique exogène.

3. Procédé suivant la revendication 1 **ou 2, caractérisé en ce que** quand les tuyauteries entourant le dispositif de traitement physique de l'eau (6) sont en plastique, on intercale avant et après celui ci au moins deux mètres de tube métallique (11).

4. Procédé selon l'une quelconque des revendications 1 à 3 **caractérisé en ce que**, quand le ballon (1) de stockage tampon comporte une anode en magnésium, on enlève celle-ci avant de commencer ledit traitement.

5. Procédé selon l'une quelconque des revendications 1 à 4, **caractérisé en ce que** l'on traite une eau dure de titre hydrotimétrique compris entre 40 et 80 degrés français et/ou contenant une haute teneur en sulfates comprise entre 150 et 1200 milligrammes par litre.

6. Installation de traitement physique de l'eau à forte dureté et/ou contenant une haute teneur en sulfates, comportant au moins un générateur (12) de production d'eau chaude à partir d'une alimentation (2) en eau froide, au moins un ballon tampon de stockage (1) de l'eau chaude produite et au moins un dispositif de traitement physique de cette eau (6) **caractérisée en ce qu'**elle comporte au moins une boucle (7,5) de tuyauterie raccordée audit générateur (12), laquelle boucle comprend au moins ledit ballon de stockage (1) tampon, un dispositif de traitement physique de l'eau (6₂) **comportant des polymères diélectriques** et une pompe de circulation (10) apte à assurer au moins deux fois par heure le renouvellement du volume dudit ballon (1) et pendant au moins huit heures par jour, ledit dispositif de traitement physique de l'eau (6₂) étant apte à enrichir l'eau en germes ioniques de carbonates de calcium et de magnésium sous forme d'aragonite majoritaire molle et non incrustante.

7. Installation de traitement physique de l'eau suivant la revendication 6, **caractérisée en ce que** ledit dispositif de traitement physique de l'eau (6₂) comporte en outre des canaux en zinc couplés auxdits polymères diélectriques, lesdits canaux en zinc étant adaptés à générer un effet microélectrolytique créant une différence de potentiel de moins un volt (-1 Volt) à travers l'eau sans apport électrique exogène.

8. Installation de traitement physique de l'eau suivant l'une quelconque des revendications **6 ou 7** et dans laquelle le générateur (12) d'eau chaude est situé dans ledit ballon de stockage (1) **caractérisée en ce que** ladite boucle (7,5) est réalisée entre la tuyauterie d'alimentation (2) en eau froide du ballon (1) et la sortie en eau chaude (4) de celui ci avant le départ (3) vers les utilisateurs (9).

9. Installation de traitement physique de l'eau suivant **l'une quelconque des revendications 6** à **8** et comportant un circuit de production d'eau chaude, à partir dudit ballon de stockage (1) lequel circuit est bouclé sur celui-ci, **caractérisé en ce que** ladite boucle (7,5) est constituée par ledit circuit.

10. Installation de traitement physique de l'eau suivant la revendication **9, caractérisée en ce que** ledit générateur (12) d'eau chaude est un échangeur situé dans ladite boucle (7,5) en amont du ballon (1) de stockage. '

11. Installation de traitement physique de l'eau selon l'une quelconque des revendications **6** à **10 caractérisée en ce que** ladite boucle (7,5) comprend un filtre (8) placé en amont de la pompe de circulation (10) et du dispositif (6₂) de traitement physique de l'eau chaude.

12. Installation de traitement physique de l'eau selon l'une quelconque des revendications **6** à **11 caractérisée en ce que** la tuyauterie située en amont et en aval dudit dispositif de traitement physique de l'eau (6) comprend une longueur de tube métallique (11) de deux mètres minimum de chaque côté dudit dispositif (6).

## Claims

1. A method of physically treating water having a high degree of hardness and/or having a high sulfate content, which water flows through at least one generator (12) for producing hot water from a cold water feed (2), at least one buffer tank (1) for storing the hot water that is produced, and at least one device (6) for physically treating said water, the method being **characterized in that**:
· prior to dispensing the hot water produced in said generator (12), it is caused to circulate around a loop (7, 5) on the generator and including at least said buffer storage tank (1) and a device (6₂) for physically treating the water, the device including dielectric polymers; and
· said recirculation is established at a rate that ensures that the content of said tank (1) is renewed at least twice per hour for at least eight hours per day, and so that by said recirculation the water is enriched with calcium and magnesium carbonate ion nuclei in the form of mainly soft and non-scale-forming aragonite which prevents the calcium and magnesium sulfate and carbonate ions from precipitating respectively in the form of hard and scale-forming gypsum and calcite.

2. A method according to claim 1, **characterized in that** said device (6₂) for physical treatment of water further comprises zinc channels coupled to said dielectric polymers, said zinc channels being adapted to generate a microelectrolytic effect creating a potential difference of minus one volt (-1 volt) through the water without any external supply of electricity.

3. A method according to claim 1 or claim 2, **characterized in that** when the pipework surrounding the device (6) for physical treatment of water is made of plastic, at least two meters of metal tube (11) are interposed upstream and downstream of the device.

4. A method according to any one of claims 1 to 3, **characterized in that** when the buffer storage tank (1) includes a magnesium anode, the magnesium anode is removed before beginning said treatment.

5. A method according to any one of claims 1 to 4, **characterized in that** treatment is applied to hard water having water of hardness lying in the range 40 to 80 degrees on the French scale and/or having a high sulfate content lying in the range 150 to 1200 milligrams per liter.

6. An installation for physically treating water having a high degree of hardness and/or having a high sulfate content, the installation comprising at least one generator (12) for producing hot water from a cold water feed (2), at least one buffer tank (1) for storing the hot water that is produced, and at least one device (6) for physical treatment of said water, the installation being **characterized in that** it includes at least one loop (7, 5) of pipework connected to said generator (12), which loop includes at least said buffer storage tank (1), a device (6₂) for physically treating the water, said device including dielectric polymers, and a circulation pump (10) suitable for ensuring that the volume of said tank (1) is renewed at least twice per hour for at least eight hours per day, said device (6₂) for physically treating water being suitable for enriching the water with calcium and magnesium carbonate ion nuclei in the form of mainly soft and non-scale-forming aragonite.

7. An installation for physically treating water according to claim 6, **characterized in that** said device (6₂) for physically treating water further comprises zinc channels coupled to said dielectric polymers, said zinc channels being adapted to generate a microelectrolytic effect creating a potential difference of minus one volt (-1 volt) through the water without any external supply of electricity.

8. An installation for physically treating water according to claim 6 or claim 7, in which the hot water generator (12) is situated in said storage tank (1), the installation being **characterized in that** said loop (7, 5) is made between the pipework (2) for feeding cold water to the tank (1) and the hot water outlet (4) therefrom, prior to the outlet(3) to users (9).

9. An installation for physically treating water according to any one of claims 6 to 8, and including a circuit for producing hot water from said storage tank (1), which circuit is looped on the tank, the installation being **characterized in that** said loop (7, 5) is constituted by said circuit.

10. An installation for physically treating water according to claim 9, **characterized in that** said hot water generator (12) is a heat exchanger situated in said loop (7, 5) upstream from the storage tank (1).

11. An installation for physically treating water according to any one of claims 6 to 10, the installation being **characterized in that** said loop (7, 5) includes a filter (8) placed upstream from the circulation pump (10) and the device (6₂) for physically treating the hot water.

12. An installation for physically treating water according to any one of claims 6 to 11, the installation being **characterized in that** the pipework situated upstream and downstream from said device (6) for physically treating water includes a minimum length of two meters of metal tube (11) on either side of said device (6).

## Patentansprüche

1. Verfahren zur physikalischen Behandlung eines sehr harten Wassers und/oder eines Wassers mit hohem Sulfatgehalt, wobei das Wasser wenigstens einen Generator (12) zur Erzeugung von Warmwasser aus einer Kaltwasserversorgung (2), wenigstens einen Ballon zur Pufferspeicherung des erzeugten Warmwassers und wenigstens eine Vorrichtung (6) zur physikalischen Behandlung dieses Wassers durchläuft, **dadurch gekennzeichnet, daß**
- man das in dem Generator (12) erzeugte Warmwasser vor dessen Verteilung in einer hieran befindlichen Schleife (7, 5) zirkulieren läßt, die wenigstens den genannten Puffer-Speicherballon (1) und eine Vorrichtung zur physikalischen Behandlung von Wasser (6₂) enthaltend dielektrische Polymere aufweist,
- die Rezirkulation entsprechend einer Menge festgelegt wird, die wenigstens zweimal pro Stunde die Erneuerung des Volumens des Ballons (1) während wenigstens acht Stunden pro Tag und derart sicherstellt, daß durch diese Rezirkulation das Wasser mit ionischen Kalzium- und Magnesiumkarbonatkeimen in Form von in der Mehrheit weichem und keinen Kesselstein bildendem Aragonit angereichert wird, welche die Kalzium- und Magnesiumsulfat- sowie Kalzium- und Magnesiumkarbonationen daran hindern, sich als harter und Kesselstein bildender Gips bzw. Kalkspat abzulagern.

2. Verfahren nach Anspruch 1, **dadurch gekennzeichnet, daß** die genannte Vorrichtung (6₂) zur physikalischen Behandlung von Wasser außerdem Zinkkanäle aufweist, die mit den dielektrischen Polymeren gekoppelt sind, wobei die Zinkkanäle ausgebildet sind, um eine mikroelektrolytische Wirkung hervorzubringen, die eine Potentialdifferenz von Minus einem Volt (-1 Volt) durch das Wasser ohne exogene elektrische Zufuhr erzeugt.

3. , Verfahren nach Anspruch 1 oder 2, **dadurch gekennzeichnet, daß** wenn die Rohrleitungen, welche die Vorrichtung (6) zur physikalischen Behandlung von Wasser umgeben, aus Kunststoff sind, vor und hinter dieser wenigstens zwei Meter Metallrohr (11) eingefügt werden.

4. Verfahren nach irgendeinem der Ansprüche 1 bis 3, **dadurch gekennzeichnet, daß** wenn der Puffer-Speicherballon (1) eine Magnesiumanode enthält, diese vor Beginn der Behandlung entfernt wird.

5. Verfahren nach irgendeinem der Ansprüche 1 bis 4, **dadurch gekennzeichnet, daß** hartes Wasser mit einer Gesamthärte zwischen 40 und 80 französischen Grad und/oder mit einem hohen Sulfatgehalt zwischen 150 und 1200 Milligramm pro Liter behandelt wird.

6. Anlage zur physikalischen Behandlung von sehr hartem Wasser und/oder von Wasser mit hohem Sulfatgehalt, die wenigstens einen Generator (12) zur Erzeugung von Warmwasser aus einer Kaltwasserversorgung (2), wenigstens einen Pufferballon (1) zur Speicherung des erzeugten Warmwassers sowie wenigstens eine Vorrichtung (6) zur physikalischen Behandlung dieses Wassers aufweist, **dadurch gekennzeichnet, daß** sie wenigstens eine Rohrleitungsschleife (7, 5) aufweist, die an den Generator (12) angeschlossen ist, die genannte Schleife wenigstens den Puffer-Speicherballon (1), eine Vorrichtung zur physikalischen Behandlung von Wasser (6₂) enthaltend dielektrische Polymere sowie eine Förderpumpe (10) aufweist, welche geeignet ist, wenigstens zweimal pro Stunde die Erneuerung des Volumens des genannten Ballons (1) während wenigstens acht Stunden pro Tag sicherzustellen, wobei die Vorrichtung (6₂) zur physikalischen Behandlung von Wasser geeignet ist, das Wasser mit ionischen Kalzium- und Magnesiumkarbonatkeimen in Form von in der Mehrheit weichem und keinen Kesselstein bildendem Aragonit anzureichern.

7. Anlage zur physikalischen Behandlung von Wasser gemäß Anspruch 6, **dadurch gekennzeichnet, daß** die genannte Vorrichtung (6₂) zur physikalischen Behandlung von Wasser außerdem Zinkkanäle aufweist, die mit den dielektrischen Polymeren gekoppelt sind, wobei die Zinkkanäle ausgebildet sind, um eine mikroelektrolytische Wirkung hervorzubringen, die eine Potentialdifferenz von Minus einem Volt (-1 Volt) durch das Wasser ohne exogene elektrische Zufuhr erzeugt.

8. Anlage zur physikalischen Behandlung von Wasser nach irgendeinem der Ansprüche 6 oder 7, bei welcher der Warmwassergenerator (12) in dem Speicherballon (1) angeordnet ist, **dadurch gekennzeichnet, daß** die Schleife (7, 5) zwischen der Kaltwasserzufuhrrohrleitung (2) des Ballons (1) und dessen Warmwasserausgang (4) vor dem Abgang (3) zu den Benutzern (9) ausgebildet ist.

9. Anlage zur physikalischen Behandlung von Wasser nach irgendeinem der Ansprüche 6 bis 8, mit einem Warmwassererzeugungskreis, ausgehend von dem Speicherballon (1) ist der genannte Kreis an diesen zur Schleife geschaltet, **dadurch gekennzeichnet, daß** die Schleife (7, 5) von dem genannten Kreis gebildet ist.

10. Anlage zur physikalischen Behandlung von Wasser nach Anspruch 9, **dadurch gekennzeichnet, daß** der Warmwassergenerator (12) ein Austauscher ist, der in der Schleife (7, 5) stromaufwärts des Speicherballons (1) angeordnet ist.

11. Anlage zur physikalischen Behandlung von Wasser nach irgendeinem der Ansprüche 6 bis 10, **dadurch gekennzeichnet, daß** die Schleife (7, 5) einen Filter (8) aufweist, der stromaufwärts der Förderpumpe (10) und der Vorrichtung (6₂) zur physikalischen Behandlung von Warmwasser angeordnet ist.

12. Anlage zur physikalischen Behandlung von Wasser nach irgendeinem der Ansprüche 6 bis 11, **dadurch gekennzeichnet, daß** die stromaufwärts und stromabwärts der Vorrichtung (6) zur physikalischen Behandlung von Wasser angeordnete Rohrleitung eine Länge an Metallrohr (11) von mindestens zwei Metern auf jeder Seite der Vorrichtung (6) aufweist.
